# FASCICULE DE BREVET EUROPEEN

(11) **EP 0 517 596 B1**
(45) Date de publication et mention de la délivrance du brevet: **06.09.1995**
(21) Numéro de dépôt: 92401534.0
(22) Date de dépôt: 04.06.1992
(51) Int. Cl.: B24B 37/04

(54) **Machine de polissage à table porte-échantillon perfectionnée**
Poliermaschine mit einem verbesserten Werkstückträger
Polishing machine with an improved workpiece holder

(30) Priorité: 06.06.1991 FR 9106868
(43) Date de publication de la demande: 09.12.1992
(73) Titulaire: COMMISSARIAT A L'ENERGIE ATOMIQUE, 75015 Paris (FR)
(72) Inventeur: Baldy, André, F-38180 Seyssins (FR); Barrois, Gérard, F-38120 Le Fontanil (FR); Blanc, Henri, F-38134 Saint Julien de Ratz (FR); Dominiak, Marcel, F-38000 Grenoble (FR)
(74) Mandataire: Signore, Robert

(56) Documents cités:
- DE-U- 8 915 458
- FR-E- 96 278
- US-A- 2 539 561
- US-A- 4 063 462

## Description

La présente invention a pour objet une machine de polissage à table porte-échantillon perfectionnée.

L'invention trouve une application particulière au polissage de composants microélectroniques intégrés dans des plaquettes de semiconducteur (en silicium par exemple). Il peut s'agir, notamment, de têtes magnétiques d'écriture et de lecture.

Des procédés de réalisation de telles têtes sont décrits dans de nombreux documents et notamment dans US-A-4,837,924 et US-A-4,333,229. Le premier document se rapporte à des têtes à structure dite "horizontale" -car formée d'un empilement de couches déposées sur la face supérieure d'une plaquette semiconductrice-et le second à des têtes à structure dite "verticale" -car formée de couches déposées sur la tranche d'une telle plaquette-.

Les micro-usinages effectués sur de telles plaquettes consistent, dans le premier cas, à niveler (ou "planariser") et à polir divers sous-ensembles intermédiaires obtenus au cours du procédé de réalisation, à définir un entrefer et à amener l'ensemble de la tête dans le plan général du substrat, dit encore plan de vol.

Dans le second cas, les micro-usinages ont pour but de définir un entrefer et d'ajuster la forme des patins de vol.

Bien que pouvant s'appliquer éventuellement à la réalisation de têtes de la deuxième catégorie (têtes verticales), la machine objet de la présente invention est avant tout destinée au polissage d'ensembles ou sous-ensembles correspondants à la première catégorie (têtes horizontales) car c'est dans ce cas que les problèmes technologiques sont les plus ardus.

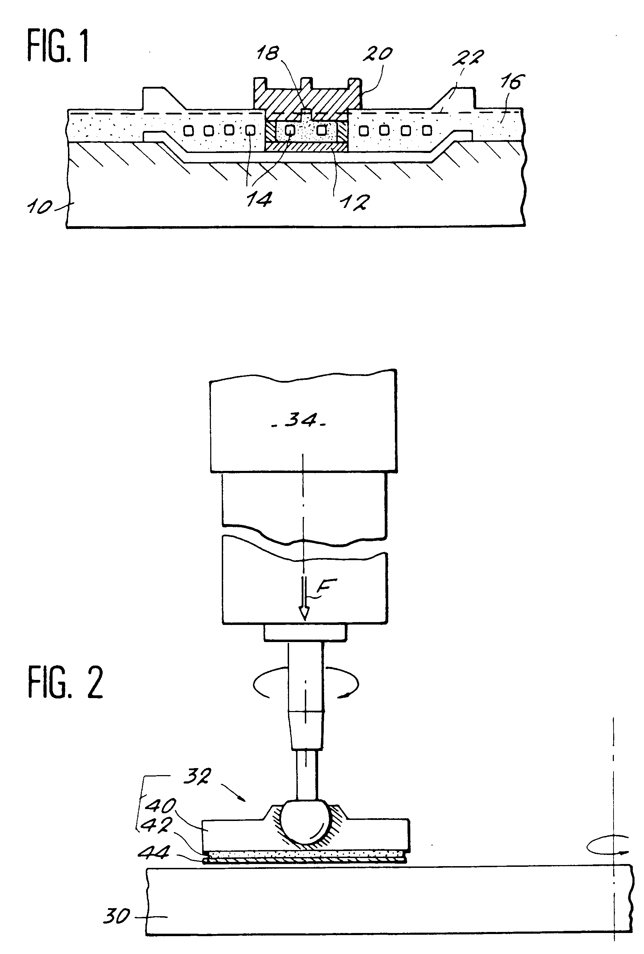

La figure 1 montre, à titre d'exemple de pièce à polir, une tête magnétique d'écriture et de lecture en structure horizontale. L'ensemble représenté correspondant à la dernière étape de réalisation avant polissage final. Cet ensemble comprend un substrat de silicium 10 dans lequel un caisson a été gravé, un circuit magnétique 12 en alliage fer-nickel, un double bobinage en cuivre 14, une couche en silice 16 de 3 à 6µm d'épaisseur, un espaceur amagnétique 18 en silice de 1µm d'épaisseur environ et deux pièces polaires supérieures 20 en fer-nickel. Le plan de polissage final est marqué en trait interrompu et référencé 22.

L'enlèvement de matière porte sur les pièces polaires 20 et sur les dépassements 23 en silice. Pour ne pas altérer le circuit magnétique, cet enlèvement ne doit pas diminuer l'épaisseur de la couche uniforme de silice de plus de 0,3µm. Le plan final de polissage définit le plan de vol de la tête.

Deux telles têtes sont généralement disposées côte à côte sur deux bandes parallèles dites "skis", définissant deux plans de vol, dans une structure générale en catamaran.

Le polissage, qui consiste en un enlèvement de matière en très petite quantité, est une opération bien connue. On la rencontre en métallographie, en optique et en microélectronique. L'une ou l'autre des deux techniques suivantes est utilisée :
- **la rectification à l'outil diamanté :** il s'agit d'un usinage dans lequel on forme un "copeau" semi-continu ou continu par deux mouvements combinés relatifs entre l'outil et la pièce à usiner (un mouvement d'avance et un mouvement de coupe) ;
- **le rodage et polissage :** il s'agit d'une abrasion plus ou moins fine (ou écrouissage) et contrôlée de la surface par frottement sur des disques très variés non abrasifs par nature, sur lesquels on apporte un abrasif en pâte ou en solution aqueuse ; une variante consiste à placer, sur un plateau de polissage rotatif, un disque de film abrasif et à arroser celui-ci lors du polissage avec un liquide pour refroidir la pièce et éviter l'encrassement.

Le polissage des plaquettes semiconductrices comprenant un très grand nombre de microcomposants intégrés pose des problèmes particuliers :
- tout d'abord, la plaquette est déformée et déformable,
- par ailleurs, le rodage doit affecter simultanément plusieurs matériaux de duretés très différentes : silice, alumine, alliage alumine/carbure de titane, alliage fer/nickel,
- les pièces à roder sont de surfaces très petites par rapport à la plaquette de silicium,
- enfin, il s'agit d'usiner, dans leur épaisseur, des couches déposées sur une plaquette et, généralement, il faut polir simultanément 600 excroissances correspondant à 600 têtes magnétiques, en dépassement de quelques microns, et cela avec une précision de l'ordre du nanomètre, sans diminuer l'épaisseur de la couche mince qui recouvre la plaquette de plus de 200 à 300nm.

Les machines de polissage connues ne permettent pas de satisfaire à toutes ces exigences. En effet, leur conception générale est telle qu'il s'introduit un couple parasite dans l'effort exercé sur l'échantillon à polir, couple qui nuit à l'homogénéité de la pression appliquée lors du polissage et provoque une attaque excessive des bords de l'échantillon.

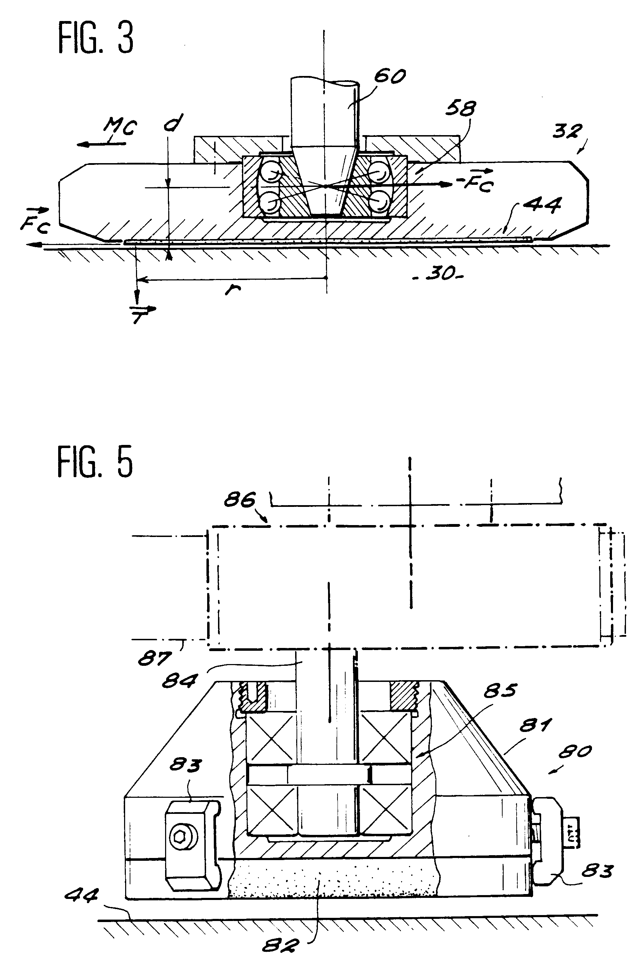

Les figures 2 et 3 permettent de mieux comprendre l'origine de cet effet nuisible.

Sur la figure 2, tout d'abord, on voit une machine connue qui comprend, schématiquement :
- un plateau de polissage 30,
- une tête 32 apte à supporter un échantillon 44,
- des moyens 34 pour exercer une force F sur la tête support 32 afin d'appliquer l'échantillon 44 sur le plateau de polissage 30 et pour les déplacer transversalement l'un par rapport à l'autre.

Le plateau de polissage 30 est animé d'un mouvement de rotation et disposé à la base de la machine.

La figure 3 montre plus en détail la tête support 32, avec une pièce ridige 40 de maintien de la plaquette échantillon 44. La pièce rigide 44 est équipée, à sa partie supérieure, d'un roulement à rotule 58 dans lequel vient prendre appui un axe 60. Le plateau 30 est animé d'un mouvement de coupe symbolisé par la flèche MC (en général il s'agit d'un mouvement de translation circulaire). La rotule 58, étant à l'intérieur de la masse de la tête support d'échantillon, le point d'application de l'effort de coupe se trouve décalé d'une valeur "d" par rapport au plan de polissage. Cette valeur est faible mais jamais nulle.

L'effort de coupe F_{C} lors de la mise en mouvement du porte-échantillon, combiné à ce décalage, entraîne qu'un effort T supplémentaire apparaît en un point de la plaque situé à une distance "r" du centre. Cet effort est dirigé perpendiculairement à l'échantillon et est proportionnel au rapport d/r (avec r ≠0).

La présente invention a justement pour but de remédier à cet inconvénient. A cette fin, elle propose une machine de polissage dont le support d'échantillon est perfectionné de telle sorte que ce couple parasite soit inexistant. Pour cela, la machine de l'invention a recours à une table porte-échantillon à cardan, dont les axes sont sécants au centre du plan à roder, (ce qui équivaut à une distance "d" nulle entre le point d'application de la force de coupe et le plan de polissage). L'outil de polissage est alors disposé au-dessus de la table porte-échantillon, tenu dans une tête support. C'est sur cette tête qu'est appliqué l'effort de coupe. La disposition est donc inversée par rapport à la disposition généralement adoptée.

On connaît déjà des machines de polissage utilisant un système à cardan. Par exemple, le document FR-E-96 278 décrit une machine à polir avec un élément tubulaire à deux encoches dans lesquelles viennent s'appuyer deux tétons d'une couronne. Cette couronne est fixée sur un coulisseau par deux vis. Grâce au jeu respectif entre ces différentes pièces, l'élément tubulaire peut osciller par rapport à la couronne, laquelle peut osciller par rapport au coulisseau, le tout selon deux axes formant un système à cardan.

Dans un tel système, l'échantillon à polir, qui est situé à la partie inférieure de l'élément tubulaire, est disposé à une certaine distance du plan des deux axes de rotation. Il y a donc nécessairement apparition d'un couple parasite.

De toute façon, les caractéristiques et avantages de l'invention apparaîtront mieux à la lumière de la description qui va suivre. Cette description porte sur des exemples de réalisation donnés à titre explicatif et nullement limitatif et se réfère à des dessins annexés, sur lesquels :
- la figure 1, déjà décrite, montre un exemple de pièce à polir correspondant à une tête magnétique d'écriture et de lecture,
- la figure 2, déjà décrite, montre la structure générale d'une machine à polir selon l'art antérieur,
- la figure 3, déjà décrite, montre un support de tête à rotule,
- la figure 4 montre une table porte-échantillon perfectionnée selon l'invention,
- la figure 5 montre une tête de polissage adaptée à la table porte-échantillon précédente,
- la figure 6 illustre un exemple de polissage d'une excroissance en silice,
- la figure 7 illustre un autre exemple de polissage dans le cas d'un motif en deux matériaux différents.

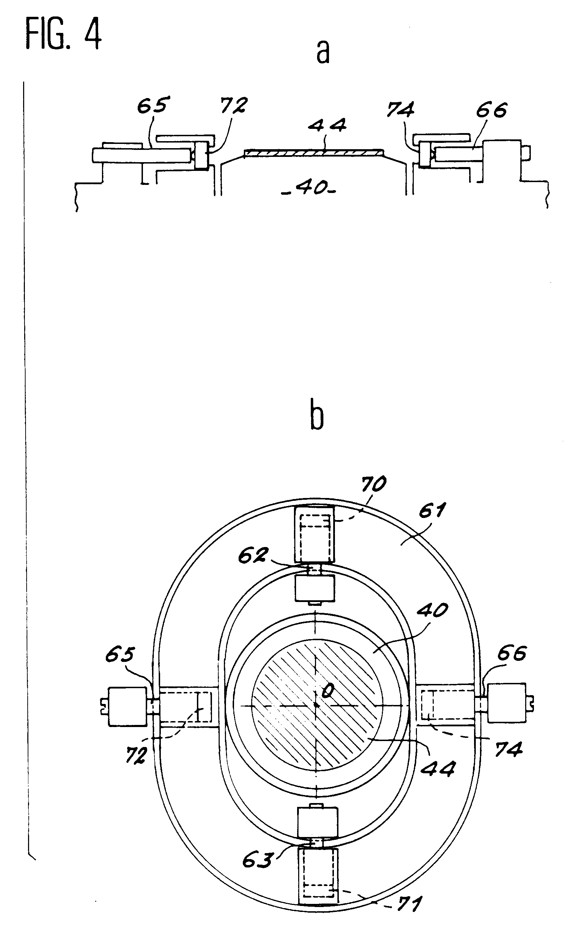

La figure 4 montre, en coupe, (partie a) et en vue de dessus (partie b), une table porte-échantillon conforme à l'invention. Cette table comporte un anneau rigide indéformable 61 relié à la pièce rigide 40 supportant la plaquette échantillon 44 par deux axes 62 et 63 et au bâti de la machine par deux autres axes 65, 66. Les axes 62 et 63, d'une part, et 65 et 66, d'autre part, sont perpendiculaires l'un à l'autre et se coupent au centre 0 de la plaquette 44.

De préférence, des capteurs d'effort de coupe 70, 71, 72, 73 sont disposés sur ces axes. Ces capteurs sont reliés à des moyens non représentés, aptes à afficher l'effort moyen de coupe. Pour cela, ces moyens font la somme redressée et filtrée des signaux alternatifs délivrés par les quatre capteurs.

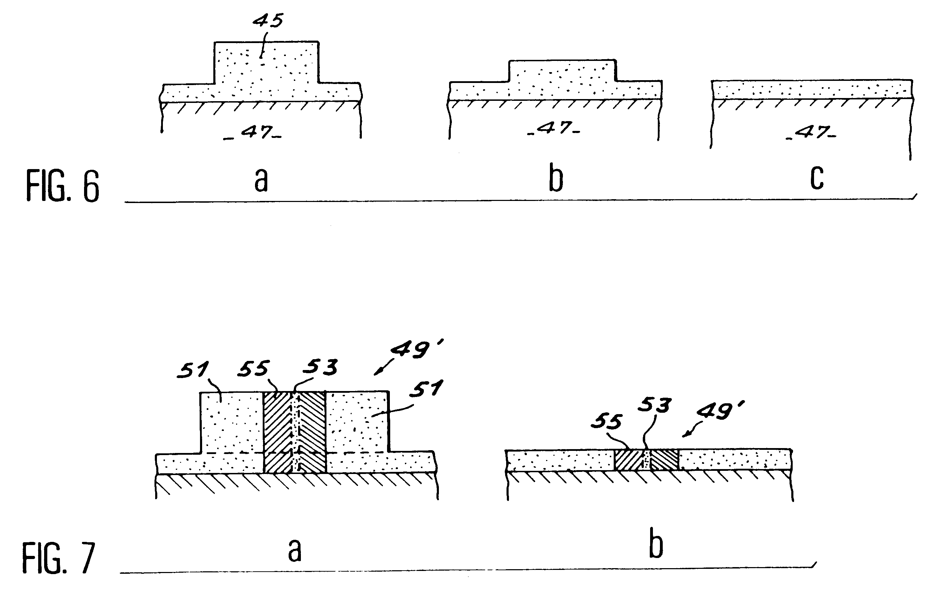

La figure 5 montre un mode de réalisation de la tête de polissage. Cette tête, référencée 80, comprend un corps 81 qui supporte un disque abrasif 82 fixé par des griffes 83. Les disques abrasifs sont ainsi interchangeables. Un axe 84 pénètre dans le corps 81 par un pivot sans jeu 85. Cet axe 84 est entraîné dans un mouvement de translation circulaire par un excentrique 86 entraîné en rotation par une courroie 87 reliée à un moteur non représenté.

Les dispositions qui viennent d'être décrites peuvent être avantageusement combinées à deux autres disposition prévues dans deux autres demandes de brevet déposées par le présent Demandeur, le jour même du dépôt de la présente demande, et intitulées respectivement : "Procédé de réalisation d'un outil de polissage et outil obtenu par ce procédé" et "Machine de polissage à contrôle de pression".

Avec une machine de polissage combinant ces trois dispositions, le Demandeur a obtenu des résultats remarquables qui sont illustrés sur les figures 6 et 7.

Sur la figure 6, tout d'abord, on voit (partie a) un relief en silice 45 d'environ 2µm de hauteur, sur une couche de silicium 47 d'épaisseur 1µm présentant une rugosité Ra=50nm.

En cours de polissage (partie b), le profil conserve ses arêtes vives.

A la fin du polissage (partie c), le relief a disparu et la couche de base a été ramenée à une épaisseur de 0,9µm, avec une rugosité Ra=1 à 2nm sur l'ensemble de la surface traitée.

La figure 7 est relative à une excroissance mettant en jeu des matériaux de duretés différentes : de la silice SiO₂ de part et d'autre (référence 51) du motif et dans un espaceur 53 très mince (d'environ 1µm) et un alliage fer-nickel FeNi 55 de part et d'autre de l'espaceur 53.

On voit (partie a) la forme initiale du motif 49 et (partie b) la forme définitive 49′ après polissage. La rugosité du sommet est de l'ordre de Ra=1 à 2nm. Ces résultats ont été obtenus sur l'ensemble de la plaque supportant les motifs et en particulier aux bords de celle-ci.

## Revendications

1. Machine de polissage comprenant :
- un moyen de polissage (30),
- un moyen (32) apte à maintenir une plaquette échantillon (44), face à polir en regard du moyen de polissage (30), ce moyen comprenant un système à cardan avec deux axes de rotation perpendiculaire,
- des moyens (34) pour appliquer la face à polir de la plaquette échantillon (44) sur le moyen de polissage (30) et pour les déplacer transversalement l'un par rapport à l'autre,
cette machine étant caractérisée par le fait que le moyen apte à maintenir la plaquette échantillon (44) est une table à cardan comprenant un porte-échantillon (40) apte à maintenir la plaquette échantillon à polir (44) face à polir dirigée vers le haut, ce porte-échantillon (40) étant articulé sur un anneau (61) par deux premiers axes (62, 63) ayant une première direction, lequel anneau est articulé sur un bâti par deux seconds axes (65, 66) ayant une seconde direction perpendiculaire à la première, ces premiers et seconds axes se coupant au centre (O) de la plaquette échantillon à roder (44).

2. Machine de polissage selon la revendication 1, caractérisé par le fait que :
- le moyen de polissage est constitué par une tête support (80) de plaquette abrasive (82), cette tête (80) étant située au-dessus de la table à cardan,
- les moyens pour appliquer la face à polir de la plaquette échantillon sur le moyen de polissage et pour les déplacer transversalement l'un par rapport à l'autre étant constitués par des moyens (84, 85, 86, 87) permettant d'appliquer une force sur la tête support (80) du plateau abrasif (82) et pour entraîner celui-ci en translation.

3. Machine de polissage selon la revendication 1, caractérisée par le fait qu'elle comprend quatre capteurs d'effort de coupe (70, 71, 72, 73) situés à 90° les uns des autres, respectivement sur les quatre axes d'articulation (62, 63, 65, 66) de la table à cardan, un moyen d'affichage de l'effort de coupe étant prévu qui est relié à ces quatre capteurs.

4. Machine de polissage selon la revendication 1, caractérisée par le fait que la tête support (80) de plaquette abrasive (86) est équipée d'un pivot sans jeu (85) relié à un excentrique (86).

## Claims

1. Polishing machine comprising a polishing means (30), a means (32) able to maintain a sample wafer (44) with the face to be polished facing the polishing means (30), said means comprising a cardan system with two perpendicular rotation shafts and means (34) for applying the face to be polished of the sample wafer (44) to the polishing means (30) and for transversely displacing them with respect to one another, characterized in that the means able to maintain the sample wafer (44) is a cardan table incorporating a sample holder (44) able to maintain the sample wafer (44) to be polished so that the face to be polished is directed upwards, said sample holder (40) being articulated on a ring (61)by two first shafts (62, 63) having a first direction, said ring being articulated on a frame by two second shafts (65, 66) having a second direction perpendicular to the first, said first and second shafts intersecting at the centre (O) of the sample wafer (44) to be ground.

2. Polishing machine according to claim 1, characterized in that the polishing means is constituted by a support head (80) of an abrasive disk (82), said head (80) being located above the cardan table, the means for applying the face to be polished of the sample wafer to the polishing means and for transversely displacing one with respect to the other being constituted by means (84, 85, 86, 87) making it possible to apply a force to the support head (80) of the abrasive disk (82) and for the translation of the latter.

3. Polishing machine according to claim 1, characterized in that it comprises four cutting force transducers (70, 71, 72, 73) at 90° of one another, respectively on the four articulation shafts (62, 63, 65, 66) of the cardan table, a cutting force display means being provided and is connected to said four transducers.

4. Polishing machine according to claim 1, characterized in that the support head of the abrasive disk (82) is equipped with a clearancefree pivot (85) connected to an eccentric (86).

## Patentansprüche

1. Poliermaschine, umfassend:
- eine Poliereinrichtung (30),
- eine Einrichtung (32) zum Festhalten einer Musterplatte (44), die zu polierende Fläche der Poliereinrichtung (30) gegenüberliegend, wobei diese Einrichtung ein kardanisches System mit zwei senkrechten Achsen umfaßt,
- Einrichtungen (34), um die zu polierende Fläche der Musterplatte (44) auf die Poliereinrichtung (30) zu pressen und um die eine bezuglich der anderen quer zu verschieben ,
wobei diese Maschine **dadurch gekennzeichnet** ist, daß besagte Einrichtung zum Festhalten der Musterplatte (44) ein kardanischer Tisch ist, einen Musterträger (40) umfassend, der die zu polierende Musterplatte (44) festhalten kann, die zu polierende Fläche nach oben gerichtet, wobei dieser Musterträger (40) angelenkt ist an einem Ring (61) durch zwei erste Achsen (62, 63) mit einer ersten Richtung, dieser Ring angelenkt ist an einem Maschinenrahmen durch zwei zweite Achsen (65, 66) mit einer zweiten Richtung, senkrecht zu der ersten, und diese ersten und zweiten Achsen sich im Zentrum (O) der feinzuschleifenden Musterplatte (44) schneiden.

2. Poliermaschine nach Anpspruch 1, dadurch gekennzeichnet, daß:
- die Poliereinrichtung gebildet wird durch einen Trägerkopf (80) einer Schleifplatte (82), wobei dieser Kopf (80) sich über dem kardanischen Tisch befindet,
- die Einrichtungen zum Anpressen der zu polierenden Fläche der Musterplatte an die Poliereinrichtung und zum Querverschieben der einen in bezug auf die andere gebildet werden durch Einrichtungen (84, 85, 86, 87), die ermöglichen, eine Kraft auszuüben auf den Trägerkopf (80) der Schleifplatte (82) und diesen parallel zu verschieben.

3. Poliermaschine nach Anpspruch 1, dadurch gekennzeichnet, daß sie vier Schnittkraftmeßgeräte (70, 71, 72, 73) umfaßt, um 90° gegeneinander versetzt, jeweils auf den vier Gelenkachsen (62, 63, 65, 66) des kardanischen Tisches, wobei eine Anzeigeeinrichtung der Schnittkraft vorgesehen ist, die verbunden ist mit diesen vier Meßgeräten.

4. Poliermaschine nach Anpspruch 1, dadurch gekennzeichnet, daß der Trägerkopf (80) der Schleifplatte (86) ausgestattet ist mit einem spielfreien Drehgelenk (85), verbunden mit einem Exzenter (86).
